# EUROPEAN PATENT APPLICATION

(11) **EP 3 272 822 A1**
(43) Date of publication of application: **24.01.2018**
(21) Application number: 17020312.9
(22) Date of filing: 18.07.2017
(51) Int. Cl.: C09D 193/02

(54) **COMPOSITION OF VARNISHES FOR GRAPHIC ARTS FORMULATED WITH SUBSTANCES USED IN THE FOOD SECTOR**

(30) Priority: 21.07.2016 IT 201600076550
(71) Applicant: Marzagalli, Marco, 26010 Ripalta Cremasca, Cremona (IT)
(72) Inventor: Marzagalli, Marco, 26010 Ripalta Cremasca, Cremona (IT)

(57) **Abstract**

The varnishes in object are made of: shellac (E904) in alkaline water solution with eventually the addition of food and/or food additives marked by the letter "E" with relative code number. Exception is the case where the varnish has to be drawn on fat traditional offset inks: in that case in addition to the a/m components it is necessary a very small percentage of surfactant.

The percentage of the various components is very variable as it depends on the:
✔ Kind of industrial application
✔ Viscosity you wish to obtain
✔ Percentage of dry in the formulation

It is possible to obtain varnishes completely gluten-free and lactose-free.

The field of application concerns the graphic arts in general.

## Description

### Field of the invention

This invention refers to the composition of varnishes to be used industrially in the graphic arts sector.

The invention in particular refers to the fact that the formulations of these varnishes contain only water as a solvent and the rest of the formulation is based ONLY on substances used in the food sector (food and/or food additives) except for online applications on traditional offset inks where a surfactant is required.

### State of art

By definition an overprint varnish is a formulation that, when applied on the substrate itself or on the printed substrate, has the function of protecting the inks and giving a protection and an aesthetic effect to the finished product.

By definition a varnish is a liquid formulation that, when applied on the substrate creates a protective film. In general it can be said that a varnish is composed of solvent, filmogen, plasticizer and various additives to confer different properties such as, for example, drawing, slippage, opacity where required, etc..

Usually the varnish film is created by drying. The solvent part of the varnish evaporates and the dry part remains on the substrate and creates the film; the more there is affinity between substrate and varnish, the greater is the cohesion between the two.

Even if it on the market there are "water based varnishes" to date it is not said that "water based varnish" is automatically synonymous with "healthy and safe". As a matter of fact, to date, most of the resins used in water based varnishes formulations are of acrylic origin (and the same is derived from oil). Moreover usually other than water are present other solvents bonded to the release into the atmosphere of VOC as described in patent CZ306229 or CN105754432 or CN105400320 or CN105368231 or CN105295505 or CN104817908. Usually there are additives of chemical origin whose presence in small percentages must then be monitored with migration tests.

In fact to date there are requirements that a water-based varnish must have to be used in the graphic arts sector especially for the food packaging sector.

Such requirements may be included in the "Brochure on materials in contact with food" drawn up by the European Commission, which refers primarily to EC Regulation 1935/2004. "The underlying principle of this Regulation is that materials or articles destined to come into contact directly or indirectly with foodstuffs must be sufficiently inert to exclude the transfer of substances to foods in such quantities as to endanger the Human health or cause an unacceptable change in the composition of foods or a deterioration of their organoleptic characteristics"

Another "guideline Regulation" for the food packaging sector is the regulation EC 2023/2006 on good manufacturing practices for materials and articles intended to come into contact with foodstuffs. Compliance with this Regulation ensures that there are adequate work place and personnel aware of the critical stages of production; that everything is documented so as to ensure quality and quality control; that there is a choice of suitable starting materials for the manufacturing process.

To set a correct formulation of a varnish intended for direct contact with food, reference is to be made to Ministerial Decree 21/03/1973, namely "Hygiene discipline of packaging, containers, utensils, intended to come into contact with foodstuffs or with substances of personal use.

Since the varnish is considered by DM 21/03/1973 as plastic material, reference should be made to the positive lists of plastic materials, ie Annex II, Section 1.

A series of chemical compounds is highlighted in this section, highlighting for each of them "conditions, limitations and tolerances of use", both for resins (PART A) and for additives (PART B).

Most of the substances listed have a reference in the "Conditions, Limitations and Tolerances of Use" section. This means that you can make paint products that can go to direct contact with the food, but at the same time you need migration checks to verify that those substances do not migrate into the food.

The range of varnishes that we now propose in this industrial invention is formulated with food substances in combination with food additives marked with the letter "E" whose sole solvent is water and it is a 100% food composition except the case where a small percentage of surfactant is added, IF NECESSARY, to allow the water-based varnish to be drawn on traditional fat offset inks.

It is important to point out that if it is necessary to add the surfactant, it is selected as a product listed in List A of the Swiss Ordinance and it will be the only product to be monitored and eventually evaluated in the migration tests. It is also important to emphasize that migration testing on an applied formulation in which several molecules need to be controlled is much more complex and expensive than having to carry out specific migration tests for a single substance.

It is also good to remember that for other applications, that is, if the varnish is applied on a virgin support rather than on water inks or UV inks, there is no need for the surfactant in the formulation, so in some cases it is possible to speak of compound formulations only consisting of water in which substances used in the food sector (ie food and / or food additives) are dissolved.

The main components of this range of varnishes are: shellac E904, sodium bicarbonate (or other alkalinizing food), water in addition to any foodstuffs such as, for example but not limited to, oils, fibers, sugars in general etc. and / or food additives marked with the letter "E" followed by a numeric code, chosen for various functions such as antifoam, thickeners, preservatives, slippery agents, gelling agents, plasticizers, pH corrections, perfuming agents, etc.

Shellac is an organic resin secreted by a small insect, Tachard lacquer, belonging to the family of common aphids, which finds its habitat on the native plants of Indian subcontinent and adjacent regions. "To protect itself, the insect produces a resinous substance with which it creates a dark purple red shield, called *lac,* a word of Sanskrit origin which means *one hundred thousand (lakh*). The shield or plaque is the raw material from which shellac is extracted; it is called sticklac to indicate that it contains, in addition to the resin, also vegetable remnants. Sticklac is often put on the market as such, but most commonly it is washed, dried in the shade, sifted and put on the market as a raw or natural shellac, which appears in mamillated crusts of dark purple colour.

To date shellac is used for a wide range of applications in the pharmaceutical sector as for example in patent n° IN226CH2013, in the confectionery industry, in hats' sector and in food coating. It is also used, for example, for the manufacture of mole, for disks, hair lacquers, floor waxes, bowling alley coatings and as electrical insulation in the past.

Shellac is also used in the varnishes as described in patent n° CN103849312 or CN104893576 or CN105086817 and in the inks, as for example described in patent n° US5814701 and JPH01158084 especially for the wood industry (patent n° CN 104552517), but the formulation we are proposing in this invention does not result to be used today as a solution for having water based varnishes suitable also for the graphic arts sector.

To produce the varnishes described in this invention, proceed as follows: first prepare an alkaline solution of water by using, for example, some sodium bicarbonate or another alkalizing food and/or food additive. The percentage of such alkalizing agent is 20% at the most. Next, warm an under constant stirring, add shellac.

When shellac is dissolved, filter the solution. The percentage of shellac to be added to the alkaline solution of water depends on the viscosity you wish to obtain and on the percentage of dry that will then affect the final formulation, in any case you can have 83% of shellac on the total at the most.

To this solution of shellac in alkaline solution of water it is possible to add food and/or food additives to give certain characteristics to the varnish film obtained. We can state that food and/or food additives may be present in a concentration ranging from 0% to 75% of the total.

To formulate, for example, a non slippery water based varnish to be applied on water inks through a flexographic machine we can proceed as follows: first prepare a solution in which you dissolve, for example, 10 grams of sodium bicarbonate in 90 grams of water. Then take 50 grams of this solution and under heating and constant stirring add 50 grams of shellac. Go on until shellac is dissolved. At the end of this process, let the solution cool down and verify the weight in order to add some starting alkaline solution of water in case there has been a loss of weight. In a new container mix 0,3 grams of CMC (E466), 25 grams of lemon fibres, 50 grams of shellac solution previously prepared and bring to 100 grams with water. The varnish obtained has an excellent water resistance and dries perfectly using the systems currently in use in the industry.
This example has *only* an explicative and *not* a limitative function.

Moreover the fact that shellac has a molecular weight of 1006 Da, guarantees greater safety to the preparation as substances with a molecular weight greater than 1000 Da, even if ingested, are not absorbed by the body in the gastrointestinal tract and therefore do not have a toxicological risk according to EFSA (European Food Safety Authority).

This solution addresses not only the food packaging industry, but all graphic arts applications, in particular those that involve the manipulation by children who often touch objects and then take their hands to the mouth or even put in contact the object with the mouth.

It is also worth pointing out that with the components chosen it is possible to formulate a varnish without gluten, which is today the cause of many allergies and intolerances.

A further advantage that the above mentioned varnish present is not only in relation to the "safety" of the finished product, but it also stars from the greater safety in manipulating the initial product since the operator who daily uses such varnishes have contact with a material that already in the liquid state is formulated with food raw materials.

## Claims

1. Water based varnish composed of: shellac dissolved in a water alkaline solution to which it is possible to add food products and/or food additives, marked by letter "E" followed by the relative number code.

2. Varnish as claimed in Claim 1 in which the water alkaline solution is formulated with an alkalizing food substance present at a maximum concentration of 20% in weight of water solution.

3. Varnish as claimed in Claim 1 and 2 in which shellac is present at a maximum concentration of 83% in weight of composition.

4. Varnish as claimed in any Claim from 1 to 3 in which food products are present at a concentration ranging between 0% and 75% in weight of composition.

5. Varnish as claimed in any Claim from 1 to 4 in which the possible additives, marked by letter "E" followed by the relative number code include: antifoam, thickeners, preservatives, slipping, gelling, plasticizers, emulsifiers, pH correctors, perfuming agents, etc. are present at a concentration ranging between 0% and 75% in weight of composition.

6. Varnish as claimed in any Claim from 1 to 5 in which the raw materials used do not contain purposely gluten.

7. Varnish as claimed in any Claim from 1 to 6 in liquid form with varying viscosity.

8. Use of a varnish as claimed in any of the previous Claims in the graphic arts field.

## Amended claims

### Amended claims in accordance with Rule 137(2) EPC.

1. Composition of varnishes containing only food substances for the industrial field of graphic arts

2. Varnish as claimed in Claim1 in which the varnish is a water based varnish

3. Varnish as claimed in Claim 1 and 2 in which the food grade shellac is present at a concentration ranging between 5% and 83% in weight of composition

4. Varnish as claimed in Claim 1 to 3 in which shellac is dissolved in an alkaline water solution obtained by alkalizing water with an alkaline substance of food grade. That alkalinizing substance is present at a concentration ranging between 0,1% and 20% in weight of composition

5. Varnish as claimed in Claim from 1 to 4 in which to the shellac solution is added a food preservative

6. Varnish as claimed in Claim from 1 to 5 in which (besides shellac, the preservative and the alkalinizing substance) the food substances and/or food additives marked with the letter "E" followed by a number code belonging to the list of food additives between E100 and E1520 and chosen to give a characteristic to the varnish film (as hardness, slipperiness, perfuming etc) are present at a concentration ranging between 0% and 75% in weight of composition

7. Varnish as claimed in Claim from 1 to 6 in which no ammonia nor alcohols are present in the composition

8. Varnish as claimed in any Claim from 1 to 7 in which the raw materials used do not contain gluten

9. Varnish as claimed in any Claim from 1 to 8 in liquid form with variable viscosity.
